# EUROPÄISCHE PATENTSCHRIFT

(11) **EP 0 955 336 B1**
(45) Veröffentlichungstag und Bekanntmachung des Hinweises auf die Patenterteilung: **28.05.2003**
(21) Anmeldenummer: 99107877.5
(22) Anmeldetag: 21.04.1999
(51) Int. Cl.: C08L 33/06, C08L 43/04, C09J 143/04

(54) **Polymergemisch zur Herstellung von Haftklebstoff**
Polymer blend for the preparation of pressure sensitive adhesive
Mélange de polymères pour la préparation d'adhésif sensible à la pression

(30) Priorität: 07.05.1998 DE 19820365
(43) Veröffentlichungstag der Anmeldung: 10.11.1999
(73) Patentinhaber: Lohmann GmbH & Co. KG, 56567 Neuwied (DE)
(72) Erfinder: Pahl, Andreas, Dr., 56567 Neuwied (DE); Becher, Rolf, 56191 Weitersburg (DE); Domanski, Reinhold, 56566 Neuwied (DE)
(74) Vertreter: Flaccus, Rolf-Dieter, Dr.

(56) Entgegenhaltungen:
- Keine einschlägigen Dokumente gefunden

## Beschreibung

Die Erfindung betrifft ein Polymergemisch, das ein oder mehrere Copoly(meth)acrylate sowie ein Polymerisat aus einem oder mehreren γ-(Meth)acryloxypropyl-trialkoxysilanen umfaßt, zur Herstellung eines Haftklebstoffes mit sehr guter Klebkraft und Feuchtigkeits -/Wärmebeständigkeit auf Glas, sowie seine Verwendung zur Herstellung von Haftklebebänder.

Als Haftklebstoff wird eine Klebstoffart bezeichnet, die im trockenen (lösemittelfreien) Zustand bei Zimmertemperatur dauerhaft klebrig ist und bei direktem Kontakt auf einer Vielzahl von verschiedensten Oberflächen haftet, wobei durch Andrücken an die Oberfläche der zu verklebenden Fügeteile eine Benetzung herbeigeführt wird, die ausreichende Haftungskräfte ergibt. Die Anwendung dieser Haftklebstoffe ist weit verbreitet. Sie werden bevorzugt zur Herstellung von diversen selbstklebenden Artikeln eingesetzt, z.B. für Klebebänder und Folien, Selbstklebeetiketten, Pflaster, Briefmarken und ähnliches. Der Stand der Technik auf dem Gebiet des Haftklebens wird z.B. in I. Benedek, L.J. Heymans, Pressure Sensitive Adhesive Technology, Marcel Decker Inc., 1.Auflage 1997 wiedergegeben.

Basispolymere der modernen Haftklebstoffe sind vorwiegend Polyacrylate, Natur- und Synthesekautschuke, Polyester, Polychloropren, Polyisobutene, Polyvinylether, Polyurethane und Polysiloxane, die oft in Kombination mit Zusatzstoffen wie beispielsweise Harzen, Weichmachern, Füllstoffen und/oder Stabilisatoren eingesetzt werden. Die Basispolymere fallen in den meisten Fällen als Ergebnis einer radikalischen Polymerisation in Lösung oder Dispersion an. Neben diesen thermisch initiierten Polymerisationen sind auch Strahlenpolymerisationen bekannt geworden. Voraussetzung für die weitere Verarbeitung ist in jedem Fall deren fließfähige Konsistenz.

Das Adhäsionsverhalten von Haftklebstoffen hängt unter anderem von der Glastemperatur des Rückgratpolymers und der eingesetzten Klebharze sowie von der Natur und der Konzentration des Vernetzers ab. Die spezifische Adhäsion wird darüber hinaus von den für die Polymerisation verwendeten Monomerbausteinen gesteuert. Auf Glas ist die Klebkraft von herkömmlichen Haftklebstoffen auf Copoly(meth)acrylatbasis nur durchschnittlich, was oft auf das Vorhandensein von dünnen kondensierten Mikrowasserfilmen auf der Glasoberfläche zurückzuführen ist. In solchen Fällen müssen daher besondere Vorkehrungen getroffen werden, um die spezifische Haftung auf Glas zu steigern.

Eine sehr wirksame Methode zur Verbesserung der Adhäsion auf Glas besteht in der Verwendung von Silanhaftvermittlern. Silanhaftvermittler wurden bislang als Additive, Coatingmittel oder als Primer angewandt. Eine der wichtigsten Anwendungen von Silanen ist die Modifizierung von anorganischen Materialien als Verstärkung oder Füllstoff für Polymere. Bekannt ist auch die Ausrüstung von Glasfasern und Glasgeweben. Auf diese Weise kommen die Silane in den unterschiedlichen Anwendungsgebieten in Hochleistungsverbundwerkstoffen, bei der Polymervernetzung und im Bautenschutz zum Einsatz. Im Bau- und Auto-mobilbereich finden die Silane Anwendung in Dichtungsmassen. Sinn des Einsatzes der Silane ist jeweils die Verbesserung der Adhäsion zu Glas und anderen anorganischen Materialien. Die Wirkungsweise der Silane beruht auf der Reaktivität ihrer siliziumfunktionellen Gruppe, die zunächst hydrolysiert und dann in einer Kondensationsreaktion eine kovalente Bindung zur anorganischen Oberfläche herstellt. Den Stand der Technik auf dem Gebiet der Silankupplungsreagenzien gibt E. Plüddemann, Silane Coupling Agents, Plenum New York, 1992, wieder.

Aus diesen Gründen sind Silankupplungsreagenzien auch schon für den Einsatz in Haftklebstoffen und Klebebändern vorgeschlagen worden. In US 4 569 879 werden verschiedene Methoden vorgestellt, um Silanhaftvermittler durch radikalische Polymerisation oder polymeranaloge Umsetzungen in die Polymerkette des Copolyacrylatrückgratpolymers einzubauen. Die Autoren berichten, daß daraus Klebebänder mit sehr guter Feuchtigkeits- und Wärmebeständigkeit und Klebkraft auf anorganischen Materialien, z.B. Rupferfolien für den Elektronikbereich hergestellt werden können. Die Auswahl an verwendeten Comonomeren zur Herstellung des Copolyacrylats ist jedoch sehr begrenzt, da z.B. carboxylgruppenhaltige und hydroxylgruppenhaltige Monomere wie Acrylsäure oder 2-Hydroxyethylacrylat sehr rasch mit den reaktiven Trialkoxysilylgruppen des Silanhaftvermittlers reagieren, wodurch einerseits unbrauchbare, hochvernetzte Polymere entstehen und andererseits die Silanhaftvermittler bzw. deren Trialkoxysilylgruppe vorzeitig zerstört wird, so daß deren Wirkungsweise als Haftvermittler nicht mehr möglich ist.

Der oben beschriebene Nachteil wird in der US 4 584 394 ausgenutzt, um Copolyacrylate gezielt zu vernetzen. Die Silane werden durch radikalische Copolymerisation in die Kette des Copolyacrylats eingearbeitet, das keine Acrylsäure enthält. Die Vernetzungsreaktion wird sodann durch Zugabe von z.B. Dodecylbenzolsulfonsäure ausgelöst. Die Silane stehen dadurch als Kupplungsreagenz nicht mehr zur Verfügung.

DE 38 75 897 beschreibt eine druckempfindliche Klebstoffmischung, bei der die Silanhaftvermittler im physikalischen Gemisch mit Kautschuken, Klebrigmachern und Weichmachern sowie Antioxidantien verwendet werden. Das Silan soll die Verankerung der Klebstoffmischung auf Vliesstoffen verbessern.

US 5 288 827 und US 5 376 378 beschreiben Copolymerisate aus γ-(Meth)acryloxyalkylsiloxysilanen und Alkyl(meth)acrylaten zur Verwendung als Haftklebstoffe, wobei diese durch UV-Polymerisation hergestellt werden. Auch hier ergeben sich Nachteile dadurch, daß die Auswahl der Comonomere beschränkt bleiben muß auf solche, die keine Gruppen enthalten, die mit den Trialkoxysilylgruppen reagieren können und diese somit einer Wirkungsweise als adhäsionssteigernde Komponente für anorganische Oberflächen wie z.B. Glas entziehen.

Es besteht daher ein Bedarf an Haftklebstoffen und Haftklebebändern für das Kleben auf Glas, die die vorgenannten Nachteile vermeiden. Diese Haftklebstoffe sollen in der Lage sein, auf Glas eine hohe Adhäsion mit Feuchtigkeits- und Temperaturbeständigkeit aufzubauen, wobei der Haftklebstoff aus einer großen Palette von dem Fachmann bekannten Copoly(meth)acrylat-zusammensetzungen bestehen kann, so daß ein breites Anwendungsspektrum abgedeckt wird.

Diese Aufgabe wird gelöst durch die vorliegende Erfindung gemäß den Merkmalen des Hauptanspruches durch eine Haftklebstoffzusammensetzung aus Polymerengemischen aus Copoly(meth)acrylaten und Polymerisaten aus einem oder mehreren γ- (Meth)acryloxypropyltrialkoxysilanen. Hieraus lassen sich Klebebänder herstellen, die eine sehr gute Adhäsion auf vielen anorganischen Materialien, insbesondere Glas, ermöglichen und sich durch Alterungsbeständigkeit, Feuchtigkeits- und Temperaturbeständigkeit auszeichnen. Die Verwendung eines Primers ist nicht mehr nötig. Auch muß die zu klebende Oberfläche nicht notwendigerweise 100%ig trocken sein.

Die Copolyacrylate werden in konventionellen Reaktoren durch Lösemittelpolymerisation hergestellt oder als Ergebnis einer Strahlenpolymerisation gewonnen.

Die nach dem erfindungsgemäßen Verfahren einzusetzenden Copoly(meth)acrylate werden aus olefinisch ungesättigten Monomeren gebildet, die vorzugsweise aus der Familie der Acrylate stammen, wobei mit dieser Bezeichnung die Acrylsäure und alle Derivate bezeichnet sind, die sich von der Acrylsäure durch Substitution in der 1- und/oder 2-Stellung und/oder an der Carboxylgruppe herleiten. Zur Haftklebstoffherstellung sind alle alle Derivate geeignet, die zu Homo- oder Copolymerisaten führen, die eine Glasübergangstemperatur unter -20 °C besitzen. Bevorzugt sind Ester der Acrylsäure und Methacrylsäure, von denen beispielsweise Butyl-, n-Octyl-, Isooctyl-, 2-Ethylhexyl-, Nonyl- oder Isononylacrylat, Decyl- und Dodecylacrylat genannt seien. In bestimmten Fällen, in denen besondere Eigenschaften des Haftklebematerials angestrebt werden, ist es vorteilhaft, wenn weitere radikalisch polymerisierbare Comonomere eingesetzt werden, wie z.B. Vinylacetat, Vinylpropionat, N-Vinylpyrrolidon, Vinylimidazol, Vinylidenchlorid, 4-Butylstyrol, Mono- oder Diester der Malein- und/oder Fumarsäure.

Die zweite Komponente in dem beanspruchten Polymerengemisch ist ein Polymerisat aus einem oder mehreren γ-(Meth)acryloxy-propyltrialkoxysilanen. Diese Polymerisate können in konventionellen Reaktoren durch radikalische Polymerisation der γ-(Meth)acryloxypropyl-trialkoxysilane in Lösung hergestellt werden. Diese Organosilane haben die allgemeine Formel 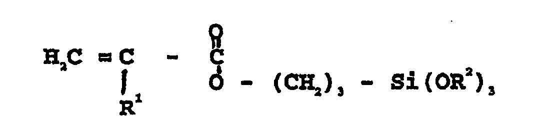 mit R¹ = H oder CH₃. OR² ist eine hydrolysierbare Gruppe wie z.B. Methoxy, Ethoxy oder Acetat. Bevorzugt ist R¹ = CH₃ und R² =-CH₃ (γ-Methacryloxypropyltrimethoxysilan).
Die Polymerisate können Zahlenmittel des Molekulargewichtes (M_{W}) von 20.000 bis 500.000 g/mol aufweisen, bevorzugt sind 50.000-100.000 g/mol.
Das Polymerengemisch gemäß der Erfindung kann neben den Copoly(meth)acrylaten und den *γ-*(Meth)acryloxypropyltrialkoxysilanen je nach Anwendungsbereich weitere übliche Zusätze, z.B. Verdicker, Weichmacher, Klebharze, Farbstoffe, Füllstoffe, Antioxidantien, Flammhemmer und/oder Vernetzersysteme für Copoly(meth)acrylate enthalten. Dem Fachmann sind eine große Anzahl solcher Stoffe, die als Handelsprodukte erhältlich sind, bekannt.

Die Herstellung dieser Gemische erfolgt bei Raumtemperatur in Lösung oder lösemittelfrei unter Verwendung von Rührwerken, Knetern, Doppelschneckenextrudern, usw.

Die so erhaltenen beschichtungsfähigen Gemische können auf bekannten Maschinen- und Anlagensystemen auf bahnförmige Materialien, wie z.B. Kunststoffolien oder Papiere beschichtet werden und in an sich bekannter Weise zu Haftklebebändern verarbeitet werden. Diese so hergestellten Haftklebebänder mit sehr guter Klebkraft auf Glas sind lagerstabil und versandfähig und können später mit den gewünschten Substraten verklebt werden. Man erhält dauerhafte Klebungen, die durch weiteren Kohäsionsaufbau mit der Zeit hochfest, temperatur- und feuchtestabil sind.

### Eigenschaftsprüfungen

Der dynamische Schälwiderstand wurde in Anlehnung an DIN EN 1939 geprüft und ist in N/25 mm angegeben. Dazu wird der Klebestreifen mittels einer Metallwalze unter Belastung von 2 kg/cm auf eine Glasplatte kaschiert. Mit einer Prüfgeschwindigkeit von 300 mm/min und einem Winkel von 180° wird die Probe von der Prüffläche durch eine Zugprüfmaschine abgezogen.

Die dynamische Scherfestigkeit ist in N/375 mm² angegeben. Mit einer Prüfgeschwindigkeit von 2 mm/min werden die Klemmen der Zugprüfmaschine auseinandergefahren und die mit Glasplatten hergestellte Klebung geschert. Die gescherte Fläche beträgt 15 x 25 mm.

Zur Überprüfung der Feuchtigkeits-/Wärmebeständigkeit der hergestellten Klebungen werden die Prüfkörper 14 Tage bei 100 % relativer Luftfeuchte und 38 °C (Schwitzwasser) in einem handelsüblichen Gerät ("Kesternich"-Test) gelagert. Anschließend wird, wie oben beschrieben, der dynamische Schälwiderstand und die dynamische Scherfestigkeit bestimmt.

### Verwendete Bezeichnungen und Abkürzungen :

- AA: = Acrylsäure
- 2-EHA: = 2-Ethylhexylacrylat
- IDA: = Isodecylacrylat
- BA: = Butylacrylat
- MMA: = Methylmethacrylat
- ISOBORA: = Isobornylacrylat
- A 174: = γ-Methacryloxypropyltrimethoxysilan (Silquest A 174, Handelsprodukt der Fa. Osi Düsseldorf)
- Si 223: = γ-Methacryloxypropyltriethoxysilan (Si 223, Handelsprodukt der Fa. Degussa)
- TiACA: = Titanacetylacetonat
- AIBN: = Azoisobutyronitril (Vazo 64, Du Pont)

Nachfolgend werden Ausführungsbeispiele gemäß der Erfindung beschrieben.

### I Herstellung der Haftklebstoffe

### a) Allgemeine Herstellungsvorschrift der Copoly(meth)acrylate

Ethylacetat und n-Hexan werden einem Reaktor vorgelegt. Die Monomeren werden in einen Rundkolben eingewogen und gemischt. In einem zweiten Rundkolben wird die Starterlösung, bestehend aus AIBN (Vazo 64) und Ethylacetat hergestellt. Starterlösung und Monomergemisch werden gemischt und in einen Tropftrichter eingefüllt. Der Reaktor wird bis auf Siedetemperatur aufgeheizt. Nach Erreichen der Siedetemperatur werden 10 % der Mischlösung (Monomerengemisch + Starterlösung) zugegeben. Anschließend wird der Reaktionsbeginn unter Rückfluß abgewartet. Nach Reaktionsbeginn wird die restliche Monomer- und Starterlösung innerhalb von 120 min zudosiert. Anschließend läßt man noch 180 min. rühren. Nachdem der Reaktor auf unter 60 °C abgekühlt ist, wird mit Ethylacetat auf einen theoretischen Feststoffgehalt von ca. 40-45 % verdünnt.

### b) Allgemeine Herstellungsvorschrift der Polymerisate aus γ-(Meth)acryloxypropyltrialkoxy-silanen

105 Gew.-Teile Ethylacetat werden in einem Dreihalskolben mit Rührer, Rückflußkühler, Thermometer und Tropftrichter vorgelegt. In einem zweiten Rundkolben wird eine Lösung, bestehend aus 99,65 Gew.-Teilen Silan (z.B. A 174), 15 Gew.-Teilen Ethylacetat und 0,35 Gew.-teilen AIBN (Vazo 64), hergestellt und in den Tropftrichter eingefüllt. Das vorgelegte Lösemittel wird bis auf Siedetemperatur aufgeheizt. Nach Erreichen der Siedetemperatur werden 10 % der Monomer-Starter-Lösung zugegeben und der Reaktionsbeginn unter Rückfluß abgewartet. Anschließend wird die restliche Mischung innerhalb von 120 min zudosiert. Danach wird noch weitere 180 min. gerührt. Man gewinnt so die Polymerisate als klare, gelbe, viskose Lösungen mit einem Feststoffgehalt von ca. 45 %.

### c) Allgemeine Herstellungsvorschrift der erfindungsgemäßen Haftklebstoffe

Zur Copoly(meth)acrylatlösung aus a) wird die jeweilige Menge polymerisiertes Silan aus b) unter Rühren bei Raumtemperatur gegeben. Anschließend wird unter Rühren eine Lösung von TiACA in Ethylacetat zugegeben (0,5 % TiACA bezogen auf Copoly(meth)acrylat). Anschließend werden gegebenenfalls weitere Zusatzstoffe hinzugefügt (Klebharze, Füllstoffe, etc.).

### Beispiele:

| Nummer | Zusammensetzung ¹⁾ Copoly(meth)acrylat | Polysilan | Zusatzstoffe |
|---|---|---|---|
| V1 | 2-EHA/AA = 90/10 | -- | |
| 1 | 2-EHA/AA = 90/10 | 10 % A ³⁾ | |
| 2 | 2-EHA/AA = 90/10 | 20 % A | |
| 3 | IDA/MMA/AA = 85/10/5 | 15 % A | 5 % Hercolyn D ⁵⁾ |
| 4 | IDA/MMA/AA = 85/10/5 | 25 % A | |
| 5 | 2-EHA/AA = 90/10 | 20 % B ⁴⁾ | |
| 6 | 2-EHA/BA/ISOBORA/AA = 50/40/5/5 | 20 % B | 5 % Polyster T 115 ⁶⁾ |

| | | | |
|---|---|---|---|
| ¹⁾ Monomerenzusammmensetzung in Gew.-% ²⁾ Angaben in Gew.-% bezogen auf Feststoff Copoly(meth)acrylat | | | |
| ³⁾ A = Polymerisat aus A 174 | | | |
| ⁴⁾ B = Polymerisat aus Si 223 | | | |
| ⁵⁾ Kolophoniumharze, Handelsprodukt der Fa. Hercules | | | |
| ⁶⁾ Terpen-Phenol-Harze, Handelsprodukt der Fa. Yasuhara Chemical | | | |

### II Herstellung der Haftklebebänder

Die vorgenannten Haftklebstofformulierungen 1-6 sowie Vergleichsbeispiel 1 wurden auf einer Beschichtungsanlage zu Transferklebebändern verarbeitet. Das Auftragsgewicht betrug 65 g/m².

### III Eigenschaften der hergestellten Haftklebebänder

Die Ergebnisse veranschaulichen die sehr guten Adhäsions- und Kohäsionseigenschaften auf Glas, insbesondere nach Feuchtigkeits-/Wärmelagerung (Schwitzwassertest) .

### 1. Dynamischer Schälwiderstand (N/25 mm)

| Nummer | 24 h RT | 14 d / 38 °C / 100 % r.F. |
|---|---|---|
| V1 | 20 | Ablösung |
| 1 | 29 | 21 |
| 2 | 31 | 24 |
| 3 | 35 | 25 |
| 4 | 36 | 28 |
| 5 | 30 | 21 |
| 6 | 33 | 24 |

### 2. Dynamische Scherfestigkeit (N/375 mm²)

| Nummer | 24 h RT | 14 d / 38 °C / 100 % r.F. |
|---|---|---|
| V1 | 453 | Ablösung |
| 1 | 518 | 831 |
| 2 | 530 | Trägerfolie gerissen |
| 3 | 441 | 754 |
| 4 | 482 | 861 |
| 5 | 503 | Trägerfolie gerissen |
| 6 | 554 | 892 |

## Patentansprüche

1. Polymergemisch zur Herstellung von Haftklebstoffen, im wesentlichen enthaltend Copoly(meth)acrylate und ein oder mehrere Polymerisate aus γ-(Meth)acryloxypropyltrialkoxysilanen.

2. Polymergemisch nach Anspruch 1, **dadurch gekennzeichnet, daß** es weitere Zusätze wie Verdicker, Weichmacher, Klebharze, Farbstoffe, Füllstoffe, Antioxidantien, Flammhemmer oder Vernetzersysteme für Copoly(meth)- acrylate enthält.

3. Polymergemisch nach Anspruch 1 oder 2, **dadurch gekennzeichnet, daß** die Copoly(meth)acrylatkomponente eine Glasübergangstemperatur unter -20 °C besitzt.

4. Polymergemisch nach einem oder mehreren der vorangehenden Ansprüche, **dadurch gekennzeichnet, daß** es sich bei der Copoly(meth)acrylatkomponente um Ester der Acryl- oder Methacrylsäure handelt.

5. Polymergemisch nach einem oder mehreren der vorangehenden Ansprüche, **dadurch gekennzeichnet, daß** es ein oder mehrere weitere radikalisch polymerisierbare Comonomere enthält.

6. Polymergemisch nach Anspruch 5, **dadurch gekennzeichnet, daß** das oder die weiteren Comonomere ausgewählt sind aus Vinylacetat, Vinylpropionat, n-Vinylpyrrolidon, Vinyl-imidazol, Vinylidenchlorid, 4-Butylstyrol, Mono- oder Diester der Malein- und/oder Fumarsäure.

7. Polymergemisch nach einem oder mehreren der vorangehenden Ansprüche, **dadurch gekennzeichnet, daß** das γ-(Meth)acryloxypropyltrialkoxysilan γ-(Meth)acryloxypropyltrimethoxy- oder -triethoxysilan ist.

8. Polymergemisch nach einem oder mehreren der vorangehenden Ansprüche, **dadurch gekennzeichnet, daß** das Molekulargewicht des Silanpolymers zwischen 20.000 und 500.000, vorzugsweise zwischen 50.000 bis 100.000 liegt.

9. Verwendung des Polymergemischs nach einem oder mehreren der vorangehenden Ansprüche zur Herstellung von Haftklebstoffen für Haftklebebänder.

10. Verwendung nach Anspruch 9 für Haftklebebänder für Glas.

## Claims

1. Polymer mixture for the production of pressure-sensitive adhesives, substantially comprising copoly(meth)acrylates and one or more polymerizates of γ-(meth)acryloxypropyltrialkoxysilanes.

2. Polymer mixture according to claim 1, **characterized in that** it contains further additives such as thickeners, plasticizers, adhesive resins, colorants, fillers, antioxidants, flame retardants, or crosslinking systems for copoly(meth)acrylates.

3. Polymer mixture according to claim 1 or 2, **characterized in that** the copoly(meth)acrylate component has a glass transition temperature of below -20 °C.

4. Polymer mixture according to one or more of the preceding claims, **characterized in that** the copoly(meth)acrylate component are esters of the acrylic or methacrylic acid.

5. Polymer mixture according to one or more of the preceding claims, **characterized in that** it contains one or more further free-radical-polymerizable comonomers.

6. Polymer according to claim 5, **characterized in that** the one or more further comonomers are selected from vinyl acetate, vinyl propionate, n-vinylpyrrolidone, vinyl imidazol, vinyledene chloride, 4-butyl styrene, mono-esters or di-esters of maleic and/or fumaric acid.

7. Polymer mixture according to one or more of the preceding claims, **characterized in that** the γ-(meth)acryloxypropyltrialkoxysilane is γ-(meth)acryloxypropyltrimethoxysilane or γ-(meth)acryloxypropyltriethoxysilane.

8. Polymer mixture according to one or more of the preceding claims, **characterized in that** the molecular weight of the silane polymers is between 20,000 and 500,000, preferably between 50,000 and 100,000.

9. The use of the polymer mixture according to one or more of the preceding claims for the production of pressure-sensitive adhesives for pressure-sensitive adhesive tapes.

10. The use according to claim 9 for pressure-sensitive adhesive tapes for glass.

## Revendications

1. Mélange de polymères pour la préparation d'adhésifs, contenant essentiellement des copoly(méth)acrylates et un ou plusieurs polymères de γ-(méth)acryloxypropyltrialcoxysilanes.

2. Mélange de polymères selon la revendication 1, **caractérisé en ce qu'**il contient d'autres additifs tels que des épaississants, des plastifiants, des résines adhésives, des colorants, des charges, des antioxydants, des agents de retardement des flammes ou des systèmes d'agents de réticulation pour les copoly(méth)acrylates.

3. Mélange de polymères selon la revendication 1 ou 2, **caractérisé en ce que** le composant copoly(méth)acrylate présente une température de transition vitreuse inférieure à - 20°C.

4. Mélange de polymères selon l'une ou plusieurs des revendications précédentes, **caractérisé en ce que** le composant copoly(méth)acrylate est un ester de l'acide acrylique ou de l'acide méthacrylique.

5. Mélange de polymères selon l'une ou plusieurs des revendications précédentes, **caractérisé en ce qu'**il contient un ou plusieurs autres comonomères aptes à polymériser par radicaux.

6. Mélange de polymères selon la revendication 5, **caractérisé en ce que** le ou les autres comonomères sont sélectionnés parmi l'acétate de vinyle, le propionate de vinyle, la n-vinylpyrrolidone, le vinylimidazol, le chlorure de vinylidène, le 4-butylstyrène et un mono ou diester de l'acide maléique et/ou de l'acide fumarique.

7. Mélange de polymères selon l'une ou plusieurs des revendications précédentes, **caractérisé en ce que** le γ-(méth)acryloxypropyltrialcoxysilane est le γ-(méth)acryloxypropyltriméthoxy ou triéthoxysilane.

8. Mélange de polymères selon l'une ou plusieurs des revendications précédentes, **caractérisé en ce que** le poids moléculaire du polymère de silane est situé entre 20 000 et 500 000, de préférence entre 50 000 et 100 000.

9. Utilisation du mélange de polymères selon l'une ou plusieurs des revendications précédentes pour la préparation d'adhésifs pour bandes adhésives.

10. Utilisation selon la revendication 9, pour des bandes adhésives prévues pour le verre.
